# EUROPEAN PATENT SPECIFICATION

(11) **EP 4 076 918 B1**
(45) Date of publication and mention of the grant of the patent: **22.05.2024**
(21) Application number: 20853569.0
(22) Date of filing: 18.12.2020
(51) Int. Cl.: B29D 30/00, B29D 30/20

(54) **METHOD AND PLANT FOR PRODUCING TYRES FOR VEHICLE WHEELS**
VERFAHREN UND ANLAGE ZUM PRODUZIEREN VON REIFEN FÜR FAHRZEUGRÄDER
PROCÉDÉ ET INSTALLATION DE PRODUCTION DE PNEUS POUR ROUES DE VÉHICULE

(30) Priority: 19.12.2019 IT 201900024688
(43) Date of publication of application: 26.10.2022
(73) Proprietor: Pirelli Tyre S.p.A., 20126 Milano (IT)
(72) Inventor: DE COL, Christian, 20126 Milano (IT); PORTINARI, Gianni Enrico, 20126 Milano (IT); TESTI, Stefano, 20126 Milano (IT)
(74) Representative: Porta & Consulenti Associati S.p.A.
(86) International application number: PCT/IB2020/062168
(87) International publication number: WO 2021/124236

(56) References cited:
- WO-A1-2011/077272
- WO-A1-2016/097905
- DE-A1-102015 203 023

## Description

The present invention relates to a method and a plant for producing tyres for vehicle wheels.

The method and the plant of the invention make it possible to carry out a process for producing tyres for vehicle wheels comprising building a plurality of structural components of tyres on respective forming drums in transit through a plurality of working stations.

A tyre for vehicle wheels generally comprises a carcass structure, a crown structure arranged in a radially outer position with respect to the carcass structure and a pair of sidewalls that are the axially outer surfaces of the tyre, with respect to a mid-plane perpendicular to the rotation axis of the same tyre.

The carcass structure comprises at least one carcass ply formed of reinforcing cords incorporated in a matrix of elastomeric material. The carcass ply has opposite end edges respectively engaged to annular anchoring structures. The latter are arranged in the areas of the tyre usually identified with the name "beads" and each of them is usually formed of a substantially circumferential annular insert, called "bead core", on which at least one filling insert is applied, in a radially outer position, the latter being radially tapered moving away from the rotation axis.

Specific reinforcing structures having the function of improving the transmission of torque to the tyre can be provided at the beads.

In the case of "tubeless" tyres, i.e. without air chamber, a layer of elastomeric material, generally known as "liner", can also be provided in a radially inner position with respect to the carcass structure to provide the necessary impermeability to the inflation air of the tyre. Generally, the liner extends from one bead to the other.

The crown structure comprises a belt structure and, in a radially outer position with respect to the belt structure, a tread band made of elastomeric material.

The belt structure comprises a belt layer, or more belt layers arranged in radial juxtaposition with respect to one another, comprising textile or metallic reinforcing cords having an orientation substantially parallel to the direction of circumferential extension of the tyre (zero degrees belt layer) or, in the case of more belt layers, a crossed orientation.

In this last case, said zero degrees belt layer can be provided in a radially outer position with respect to the belt layers having a crossed orientation.

A so-called "under-layer" of elastomeric material can be arranged between the belt structure and the tread band, the under-layer having properties suitable for ensuring a stable union of the tread band to the belt structure.

Longitudinal and transversal grooves are typically formed on the tread band and are arranged to define a desired tread pattern.

The sidewalls are made of elastomeric material and are the axially outer surfaces with respect to the annular anchoring structures, to the carcass ply(ies), to the belt layer(s) and possibly to at least one portion of the tread band. For example, each of the sidewalls extends from one of the lateral edges of the tread band up to the respective bead annular anchoring structure.

The term "elastomeric material" is used to indicate a composition comprising at least one elastomeric polymer and at least one reinforcing filler. Such a composition can also comprise additives like, for example, a cross-linking agent and/or a plasticizer. Thanks to the presence of the cross-linking agent, such a material can be cross-linked by heating, so as to form the final manufactured product.

The term "green tyre" is used to indicate a tyre obtained from the building process and not yet molded and vulcanized.

The term "finished tyre" is used to indicate a tyre obtained by subjecting a green tyre to a molding and vulcanization process.

The term "tyre" is used to indicate a finished tyre or a green tyre.

The terms "axial", "axially", "radial", "radially", "circumferential" and "circumferentially" are used with reference to the tyre or to a forming drum used in the production process of the tyre.

In particular, the terms "axial" and "axially" are used to indicate references/parameters arranged/measured or extending in a direction substantially parallel to the rotation axis of the tyre or of the forming drum.

The terms "radial" and "radially" are used to indicate references/parameters arranged/measured or extending in a direction substantially perpendicular to the rotation axis of the tyre or of the forming drum and lying in a plane comprising such a rotation axis.

The terms "circumferential" and "circumferentially" are used to indicate references/parameters arranged/measured or extending along a circumference that extends around the rotation axis of the tyre or of the forming drum.

The term "structural element" of a tyre is used to indicate any portion of the tyre in the form of a semi-finished product ready to be fed to a machine for a building operation. Examples of structural elements of the tyre are the following elements: liner, under-liner, anti-abrasion insert, complex (assembly formed at least of the liner and under-liner), annular anchoring structure (assembly formed at least of the bead core and respective filling insert), carcass ply, belt layer, belt under-layer, under-layer of the tread band, sidewall, sidewall insert, tread band, textile or metallic reinforcement, reinforcing element made of elastomeric material etc..

The term "structural component" of a tyre is used to indicate any portion of the tyre made of at least two structural elements. Examples of structural components of the tyre are the carcass structure, the crown structure, or certain portions thereof. For example, referring to the carcass structure, the assembly formed at least of the liner and one carcass ply and, referring to the crown structure, the assembly formed of two belt layers, each of them comprising reinforcing cords having a crossed orientation with respect to the other layer.

The term "manipulator" is used to indicate a device configured to support a forming drum and to move it independently along at least two Cartesian axes X, Y, Z. Preferably, the manipulator has the capability of rotating the forming drum around at least one axis X, Y, Z.

The term "loader" is used to indicate a device configured to support a structural element and to move it along at least one direction in order to position it inside a working station of a tyre production plant.

The term "support member" is used to indicate a member configured to support a forming drum by itself, i.e. without the help or intervention of other mechanical/functional elements.

The term "normal operation" is used to indicate the normal operating conditions of a tyre production plant, thus excluding possible starting or stopping transient periods of the plant itself, for example linked to a change of production batch.

The term "tyre being processed" is used to indicate a tyre in any step of the related production process that goes from building at least one structural element constituting the carcass structure and/or the crown structure until the finished tyre is obtained. For example, a tyre being processed is the one which enter into/exits from the working station dedicated to position the annular anchoring structures on the opposite end edges of the carcass ply(ies) previously deposited on a forming drum and to turning up such end edges around the aforementioned annular anchoring structures.

The term "building activity" is used to indicate any process carried out in any building device provided in any working station and that comprises the deposition or formation of a structural element on a forming drum. For example, a building activity is the process by which the annular anchoring structures are positioned on the opposite end edges of the carcass ply(ies) previously deposited on a forming drum and such end edges are turned about the aforementioned annular anchoring structures.

The term "functionally independent" is used to indicate the capability of a member or manipulator or loader to carry out the function it is provided for in an absolutely autonomous manner, i.e. without any functional constraint with other members or manipulators or loaders provided in the same building device to carry out the same function.

The term "cycle time of a building device" is used to indicate the time that elapses between the exit of a tyre being processed from the building device and the exit of the next tyre being processed from the same building device, in normal operating conditions. The cycle time of a building device is therefore given by the sum of the time necessary to load the tyre being processed in the building device, of the time necessary to carry out the building activity, and of the time necessary to unload the tyre being processed from the building device.

The term "total cycle time of a plant" is used to indicate the time that elapses between one tyre being processed exiting from a plant and the next tyre exiting from the same plant, in normal operating conditions.

The production cycles of a tyre provide that, after a building process of a green tyre in which the various structural components of the tyre itself are built and assembled, the green tyres are transferred to a molding and vulcanization line wherein a molding and vulcanization process adapted to define the structure of the finished tyre according to a desired geometry and tread pattern is carried out.

The building of the structural components of the tyres and the subsequent assembly thereof is carried out on suitable forming drums. For example, the carcass structure can be built on a first forming drum, known as first stage drum, and the crown structure can be built on a second forming drum, known as auxiliary or second stage drum. The assembly of the carcass structure to the crown structure can be carried out on the first forming drum or on a different forming drum, known as shaping drum.

WO 2010/070374 describes a production plant of green tyres for vehicle wheels comprising:
- at least one building line for building a carcass structure on a first forming drum, such a building line comprising a plurality of working stations arranged according to a sequential series; and
- at least one building line for building a crown structure on at least one second forming drum, such a building line comprising a plurality of working stations arranged according to a sequential series; and
- at least one shaping and assembling station of the tyre being processed adapted to shape said carcass structure on the first forming drum by assembling the carcass structure to said crown structure of the tyre being processed.

WO 2016/097905 describes a method for managing a carcass structure building line comprising a plurality of stations including an unloading station for unloading a built carcass structure and a plurality of building stations each comprising one or more building devices adapted to form a carcass structure being processed. The method comprises selecting one between a building cycle and a size change cycle. The building cycle comprises sequentially and cyclically moving between the plurality of building stations and the unloading station at least two forming drums being processed, wherein at any operative moment of said building cycle, only the unloading station and a starting station of the plurality of building stations can comprise a forming drum being processed dissociated from the carcass structure being processed. The size change cycle comprises substituting, one at a time, the forming drums being processed with entering forming drums by using a movement sequence among the building stations that is at least partially different from that provided in the building cycle, wherein at at least one operative moment of the size change cycle at least one building station different from the starting station comprises an entering forming drum dissociated from the carcass structure being processed.

DE 102015203023A1 describes a method for manufacturing a vehicle tire with a tire carcass, tire beads with cores, a tire belt and a tread strip. The method comprises: a) providing a front machine with a tire building drum, the front machine being designed to be freely movable on a floor; b) providing a large number of freely movable and automatically movable servicers, each servicer having at least two unwinding stations equipped with different tire components; c) positioning the front machine in front of one of the servicers; d) carrying out a manufacturing step with the servicer, with a first unwinding station of the servicer transferring the tire component to the front machine and a second unwinding station of the servicer being in a waiting position, the second unwinding station being used when the first unwinding station is empty or when changing to a new tire product; e) positioning the front machine in front of a further servicer for applying a further tire component; f) completing the vehicle tire with further steps.

WO 2011/077272 describes a process and a plant for producing tyres, wherein a working station is provided having an entry location, a working location and an exit location. An intermediate transfer device operates in the working station, the intermediate transfer device cooperating with a robotized arm for moving a plurality of forming drums between the aforementioned locations. The intermediate transfer device is intended to transfer the forming drums from the working location to an intermediate transfer location and vice-versa. The robotized arm is intended to transfer the forming drums from the entry location to the intermediate transfer location and from the intermediate transfer location to the exit location.

In order to increase the productivity or efficiency thereof, modern tyre production plants comprise a plurality of forming drums that transit simultaneously in different working stations so that while some working stations are used for the production of one tyre other working stations are used for the production of other tyres.

The Applicant has observed that the total cycle time of a tyre production plant, and therefore the productivity or efficiency of such a plant, is influenced by the cycle time of the single building devices provided in the single working station in which the tyre being processed transits. In particular, since in a tyre production plant there are building devices having a cycle time much longer than that of other building devices, the total cycle time of the plant is mainly influenced by the cycle time of the building devices with the longest cycle time.

The Applicant has also observed that part of the cycle time of a building device is dedicated to production activities, like for example the building activities carried out on the forming drums, and another part of the cycle time of a building device is dedicated to non-production activities, like for example the loading and unloading activities for loading and unloading the forming drums into/from the building devices and the loading activities for loading structural elements which are functional to the building of the structural components. The non-production activities can create waits and inefficiencies in the building device in those cases in which all of the aforementioned activities, or many of them, are carried out in sequence, i.e. one after the other. In particular, cases can occur in which the production activities must be kept on hold until non-production activities are completed or cases in which some non-production activities cannot be carried out until other non-production activities are completed.

The Applicant has also observed that typically the building devices must provide , in addition to loading and unloading activities for loading and unloading the forming drums, loading activities for loading a plurality of structural elements which are functional to the building of structural components, and must provide that as the number of structural elements to be loaded increases, the time dedicated to the aforementioned loading and unloading activities, i.e. the time dedicated to non-production activities, increases. This also results in an increase in the times to be waited in order to carry out the production activities and other non-production activities.

With the aim of reducing as much as possible the cycle time of the building devices, and in this way the total cycle time of the plant, the Applicant has realised the importance of keeping as short as possible the time dedicated to non-production activities, in particular to the loading and unloading activities for loading and unloading the forming drums into/from the aforementioned building devices, particularly in building devices having longer cycle time, like for example the building device in which the annular anchoring structures is positioned on the opposite end edges of the carcass ply(ies) previously deposited on a forming drum and such end edges are turned up around the aforementioned annular anchoring structures.

The Applicant has perceived that the cycle time of a building device, like for example the aforementioned one, can be reduced by both providing the building device with various mutually distinct working areas, some of these areas being dedicated to the loading and unloading activities for loading and unloading the forming drums (and thus to non-production activities), whereas others of these areas are dedicated to building activities (and thus to production activities), and carrying out the unloading activities for unloading the forming drums from the building device through members which are different from those used for loading the forming drums in the building device.

The Applicant has therefore found that it is possible to achieve the desired reduction of the cycle time of a building device, and therefore of the total cycle time of the tyre production plant, by providing three distinct areas in the building device, one dedicated to loading the forming drum, one dedicated to unloading the forming drums and one dedicated to building activities, and by serving each of the loading and unloading areas with a respective manipulator.

The present invention therefore relates, in a first aspect thereof, to a method for producing tyres for vehicle wheels according to claim 1.

The Applicant believes that the provision of the aforementioned first, second and third areas and of the aforementioned first and second manipulator allows, in addition to a reduction of the cycle time of the building device, and therefore of the total cycle time of the plant, an effective management of possible slowing or interruption of production occurring downstream of the aforementioned building device. For example, it is possible to provide for the simultaneous presence of two forming drums inside the building device, one in the first area and the other in the third area, or on the respective manipulators, until the production downstream of the building device goes back to normal.

Moreover, the provision in the building device of an area dedicated solely to performing the building activity, i.e. distinct from the areas dedicated to the loading and unloading of the forming drums into/from the building device, makes it possible to have the loading and unloading manipulators available even while the building activity is being carried out, thus further reducing the cycle time of the building device.

In a second aspect thereof, the invention relates to a plant for producing tyres for vehicle wheels according to claim 11.

Such a plant allows the production method described above to be carried out.

The method and the plant described above allow a process for building a plurality of carcass structures of tyres for vehicle wheels to be carried out.

The Applicant believes that such a process makes it possible to achieve a reduction of the cycle time of the bead formation device.

In at least one of the aforementioned aspects, the present invention can have at least one of the preferred features described hereinafter.

Preferably, during the action of loading said first forming drum in said first area, said first forming drum is set in rotation about its own rotation axis.

In the specific case in which the forming drum supports one or more carcass ply(ies) having cantilevered opposite end edges intended to be subsequently turned about respective annular anchoring structures, such a provision makes it possible to contain and make it uniform in the circumferential direction the bending strain to which such end edges are subjected due to gravity.

Preferably, during the action of unloading said first forming drum from said third area said first drum is set in rotation about its own rotation axis.

Such a provision makes it possible to carry out further actions the require the rotation of the forming drum, like for example, in the specific case in which the forming drum supports one or more carcass ply(ies) having opposite end edges turned around respective annular anchoring structures, the control of the turns by laser scanner.

Preferably, building said plurality of structural components comprises, after the action of moving said first forming drum from said second area to said third area, the following action: loading a first structural element of tyre in said first area by a first loader.

The presence of a forming drum in the second and/or third area of the building device therefore does not prevent other preparatory actions to the building of another tyre on another forming drum from being carried out at the first area.

The first area of the building device is therefore dedicated, in addition to the loading of the forming drums, to the loading of the aforementioned first structural element.

Preferably, building said plurality of structural components comprises, after the action of loading said first structural element of tyre in said first area, the following action: moving said first loader from a respective first position in which said first loader is arranged at least partially in said first area to a respective second position in which said first loader is arranged totally outside of said building device.

Preferably, the action of moving said first loader from said respective first position to said respective second position is carried out at least in part simultaneously with the action of unloading said first forming drum from said third area.

Such a provision allows to further reduce the cycle time of the building device.

Preferably, building said plurality of structural components further comprises the following action:
- loading a second structural element of tyre in said third area by a second loader.

Preferably, the second loader is functionally independent from the first loader.

The third area of the building device is therefore dedicated, in addition to the unloading of the forming drums, to the loading of the aforementioned second structural element.

Preferably, the action of loading said second structural element of tyre in said third area occurs at least in part simultaneously with the action of unloading said first forming drum from said third area.

Such a provision allows a further reduction of the cycle time of the building device.

The action of loading said second structural element of tyre in said third area can also occur at least in part simultaneously with the action of loading another forming drum in said first area. Indeed, the presence of a forming drum in the first area of the building device does not prevent other preparatory actions to the building of another tyre on another forming drum from being carried out at the third area.

Preferably, building said plurality of structural components comprises, after the action of loading said second structural element of tyre in said third area, the following action: moving said second loader from a respective first position in which said second loader is arranged at least partially in said third area to a respective second position in which said second loader is arranged totally outside of said building device.

Preferably, the action of moving said second loader from said respective first position to said respective second position is carried out at least in part simultaneously with the action of moving said first forming drum from said first area to said second area.

Such a provision allows a further reduction of the cycle time of the building device.

In preferred embodiments, said first area, second area and third area are aligned along a first direction of extension of said building device.

Preferably, the action of loading said first forming drum in said first area by said first manipulator comprises the following action: moving said first manipulator along a second direction from a respective first position in which said first manipulator is arranged totally outside of said building device to a respective second position in which said first manipulator is arranged partially inside said building device.

Preferably, the action of moving said first manipulator from said respective first position to said respective second position occurs at least in part simultaneously with the action of moving said first loader from said respective first position to said respective second position.

Such a provision allows a further reduction of the cycle time of the building device.

In preferred embodiments, said second direction is perpendicular to said first direction.

Preferably, the action of loading said first forming drum in said first area by said first manipulator comprises the action of transferring said first forming drum to a first support member arranged in said first area.

Preferably, said first support member is moveable along said first direction between said first area and said second area.

Preferably, the action of moving said first forming drum from said first area to said second area comprises the following action: moving said first support member from said first area to said second area along said first direction.

Preferably, the action of unloading said first forming drum from said third area by said second manipulator comprises the action of moving said second manipulator along a third direction parallel to said second direction from a respective first position in which said second manipulator is arranged partially inside said building device to a respective second position in which said second manipulator is arranged totally outside of said building device.

Preferably, the action of unloading said first forming drum from said third area by said second manipulator comprises the action of rotating said second manipulator about its own vertical rotation axis.

Such a provision makes it possible to suitably position the forming drums outside of the building device to carry out further actions and/or for the subsequent picking up by further members in order to carry out the subsequent building steps.

Preferably, the action of unloading said first forming drum from said third area by said second manipulator comprises the action of picking up said first forming drum from a second support member arranged in said third area.

Preferably, said second support member is moveable along said first direction between said third area and said second area.

Preferably, the action of moving said first forming drum from said second area to said third area comprises the action of moving said second support member from said second area to said third area along said first direction.

Preferably, the action of moving said second support member from said second area to said third area occurs at least in part simultaneously with the action of moving said first support member from said second area to said first area.

Such a provision makes it possible to further reduce the cycle time of the building device.

Preferably, the action of carrying out at least one building activity on said first forming drum, comprises, after having moved said first support member from said first area to said second area along said first direction, moving said second support member from said third area to said second area along said first direction.

Preferably, the action of carrying out at least one building activity on said first forming drum comprises, after having moved said first support member from said first area to said second area along said first direction, coupling said second support member to said first forming drum in said second area.

While the building activity is carried out the two manipulators can be set to proceed subsequently with the loading of a new forming drum in the building device and/or with the unloading of the forming drum on which the building activity is being made, thus contributing to the reduction of the cycle time of the building device.

Preferably, it is provided that a second forming drum is loaded in said first area by said first manipulator.

Preferably, it is provided that said second forming drum is moved from said first area to said second area.

Preferably, it is provided that at least one building activity for building a first structural component of a second tyre is carried out on said second forming drum in said second area.

Preferably, after having carried out said at least one building activity on said second forming drum, it is provided that said second forming drum is moved from said second area to said third area.

Preferably, it is provided that said second forming drum is unloaded from said third area by said second manipulator.

Preferably, the action of unloading said first forming drum from said third area is carried out at least in part simultaneously with the action of loading said second forming drum in said first area by said first manipulator.

Preferably, during the action of loading said second forming drum in said first area, said second forming drum is set in rotation about its own rotation axis.

Preferably, during the action of unloading said second forming drum from said third area said second forming drum is set in rotation about its own rotation axis.

Preferably, the action of loading said first structural element of tyre in said first area by said first loader is carried out before the action of loading said second forming drum in said first area by said first manipulator.

Preferably, the action of moving said first loader from said respective first position to said respective second position is carried out at least in part simultaneously with the action of loading said second forming drum in said first area.

Preferably, the action of loading said second forming drum in said first area by said first manipulator comprises the following action: moving said first manipulator along said second direction from said respective first position in which said first manipulator is arranged totally outside of said building device to said respective second position in which said first manipulator is arranged partially inside said building device.

Preferably, the action of loading said second forming drum in said first area by said first manipulator comprises the action of transferring said second forming drum to said first support member arranged in said first area.

Preferably, the action of moving said second forming drum from said first area to said second area comprises the following action: moving said first support member from said first area to said second area along said first direction.

Preferably, the action of unloading said second forming drum from said third area by said second manipulator comprises the action of moving said second manipulator along said third direction parallel to said second direction from said respective first position in which said second manipulator is arranged partially inside said building device to said respective second position in which said second manipulator is arranged totally outside of said building device.

Preferably, the action of unloading said second forming drum from said third area by said second manipulator comprises the action of rotating said second manipulator around its own vertical rotation axis.

Preferably, the action of unloading said second forming drum from said third area by said second manipulator comprises the action of picking up said second forming drum from said second support member arranged in said third area.

Preferably, the action of moving said second forming drum from said second area to said third area comprises the action of moving said second support member from said second area to said third area along said first direction.

Preferably, the action of carrying out at least one building activity on said second forming drum, comprises, after having moved said first support member from said first area to said second area along said first direction, moving said second support member from said third area to said second area along said first direction.

Preferably, the action of carrying out at least one building activity on said second forming drum comprises, after having moved said first support member from said first area to said second area along said first direction, coupling said second support member to said first forming drum in said second area.

Preferably, said second manipulator is functionally independent from said first manipulator.

Preferably, said first manipulator is operatively coupled to a first motor group configured to set said forming drum in rotation about its own rotation axis when said forming drum is coupled to said first manipulator.

Preferably, said second manipulator is operatively coupled to a second motor group configured to set said forming drum in rotation about its own rotation axis when said forming drum is coupled to said second manipulator.

Preferably, said second manipulator is rotatable about its own vertical rotation axis.

Preferably, said building device comprises a first support member configured to support said forming drum in a cantilevered manner.

Preferably, said building device comprises a second support member configured to support said forming drum in a cantilevered manner.

Preferably, said first support member is moveable between said first area and said second area.

Preferably, said second support member is moveable between said third area and said second area.

Preferably, said building device comprises a third control member configured to control the movement of said first support member.

Preferably, said building device comprises a fourth control member configured to control the movement of said second support member.

In preferred embodiments, said third control member is functionally independent from said fourth control member.

Preferably, said at least one working station comprises a first loader moveable between a respective position in which said first loader is arranged totally outside of said building device and a respective position in which said first loader is arranged at least partially in said first area to load a first structural element of tyre in said first area.

Preferably, said at least one working station comprises a second loader functionally independent from the first loader and moveable between a respective position in which said second loader is arranged totally outside of said building device and a respective position in which said second loader is arranged at least partially in said third area to load a second structural element of tyre in said third area.

Preferably, said at least one working station comprises a fifth control member configured to control the movement of said first loader.

Preferably, said at least one working station comprises a sixth control member configured to control the movement of said second loader.

In preferred embodiments, said sixth control member is functionally independent from said fifth control member.

Preferably, said first area, second area and third area are aligned along a first direction of extension of said building device.

Preferably, said first manipulator is moveable along a second direction perpendicular to said first direction between a respective position in which said first manipulator is arranged totally outside of said building device and a respective position in which said first manipulator is arranged partially inside said building device.

Preferably, said second manipulator is moveable along a third direction parallel to said second direction between a respective position in which said second manipulator is arranged totally outside of said building device and a respective position in which said second manipulator is arranged partially inside said building device.

Preferably, a first control member is provided in said at least one working station, the first control member being configured to control the movement of said first manipulator.

Preferably, a second control member is provided in said at least one working station, the second control member being configured to control the movement of said second manipulator.

Preferably, said second control member is functionally independent from said first control member.

Preferably, said structural components are carcass structures.

Preferably, said working station is a carcass structures building station.

Preferably, said building device is a tyre bead formation device.

Preferably, said at least one building activity comprises positioning an annular anchoring structure at each of corresponding end edges of at least one carcass ply deposited on said first/second forming drum.

Preferably, said at least one building activity comprises turning each of said end edges around the respective annular anchoring structure.

Preferably, said first structural element of tyre and said second structural element of tyre are annular anchoring structures.

As stated above, the method and the plant described above allow a process for building a plurality of carcass structures of tyres for vehicle wheels to be carried out.

In such a process, preferably, it is provided that a second forming drum is loaded in said first area by said first manipulator.

Preferably, it is provided that said second forming drum is moved from said first area to said second area.

Preferably, it is provided that said bead formation activity is carried out on said second forming drum in said second area.

Preferably, after having carried out said bead formation activity on said second forming drum, said second forming drum is moved from said second area to said third area.

Preferably, it is provided that said second forming drum is unloaded from said third area by said second manipulator.

Preferably, the action of unloading said first forming drum from said third area by said second manipulator is carried out at least in part simultaneously with the action of loading said second forming drum in said first area by said first manipulator.

Preferably, after the action of moving said first forming drum from said second area to said third area and before the action of loading said second forming drum in said first area by said first manipulator, it is provided that a first annular anchoring structure is loaded in said first area by said first loader.

Preferably, it is provided that a second annular anchoring structure is loaded in said third area by said second loader.

Preferably, the action of loading said second annular anchoring structure in said third area occurs at least in part simultaneously with the action of unloading said first forming drum from said third area.

Preferably, after the action of loading said second annular anchoring structure in said third area, it is provided that said second loader is moved from the aforementioned respective first position to the aforementioned respective second position.

Preferably, the action of moving said second loader from said respective first position to said respective second position is carried out at least in part simultaneously with the action of moving said first forming drum from said first area to said second area.

The fact that it is possible to carry out some actions at least in part simultaneously with other actions allows a reduction of the cycle time of the tyre production plant.

Further features and advantages of the present invention will become clearer from the following detailed description of a preferred embodiment thereof, made with reference to the attached drawings.

In such drawings:
- figure 1 is a schematic radial half-section view of a tyre that can be made by the method and the plant of the invention;
- figure 2 is a schematic view of a plant for producing tyres for vehicle wheels according to an embodiment of the invention;

- figure 3 is a schematic view of a working station of the plant of figure 2 in various operating configurations thereof (one of such operating configurations is shown with a solid line whereas other operating configurations are shown with dashed lines);
- figure 4 is a schematic view of two manipulators used in the working station of figure 3;
- figures 5a-5f show the working station of figure 3 in a plurality of different operating configurations thereof taken during the operation of the plant of figure 2.

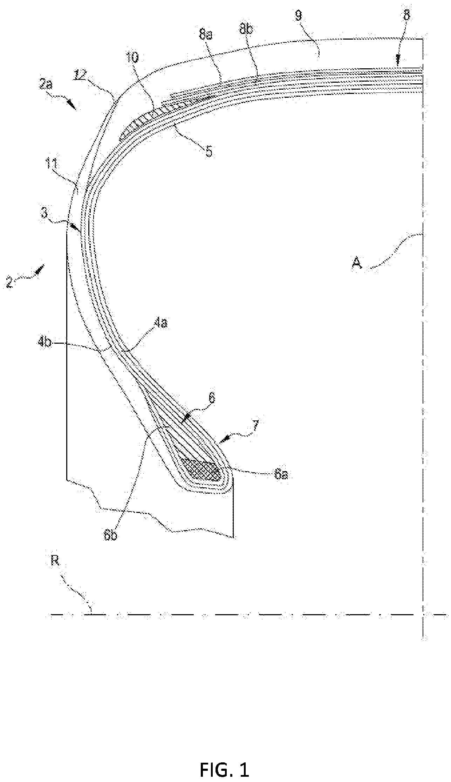

In figure 1, an example of a tyre that can be produced in a plant 1 for producing tyres for vehicle wheels in accordance with the present invention is indicated with reference numeral 2.

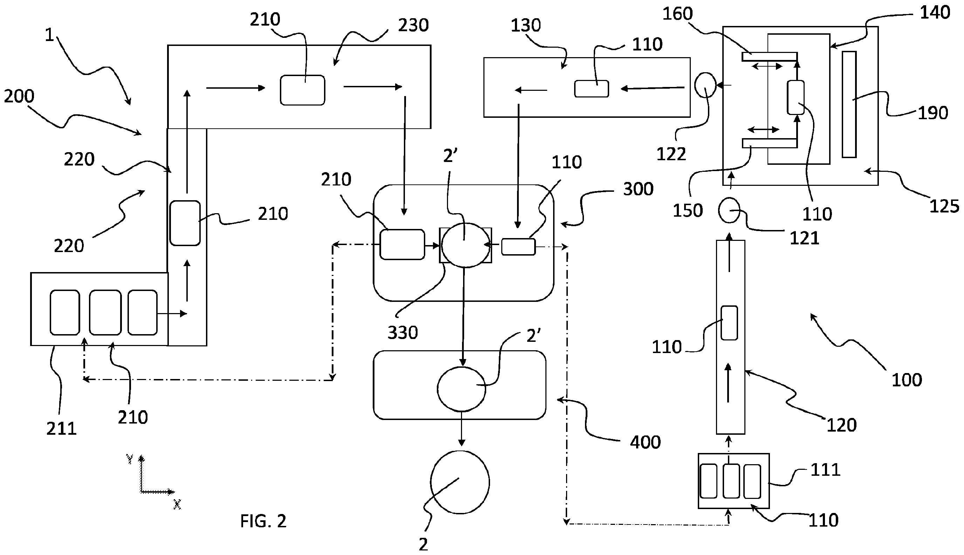

The tyre 2 has a mid-plane A perpendicular to the rotation axis R thereof (in figure 2 the position of the rotation axis R with respect to the section of the tyre 2 is shown in an indicative and schematic manner). The mid-plane A divides the tyre 2 into a first axial half 2a and a second axial half. For the sake of simplicity of illustration, figure 2 shows only the first axial half 2a of the tyre 2, the other half being substantially a mirror image of the first axial half 2a (except for the tread pattern that may not be symmetrical with respect to the aforementioned mid-plane A).

The tyre 2 substantially comprises a carcass structure 3 having one or two carcass plies 4a, 4b. A layer of impermeable elastomeric material or so-called liner 5 is applied in a radially inner position with respect to the carcass ply(ies) 4a, 4b.

Two annular anchoring structures 6 (only the one of the axial half 2a is shown in figure 2) are engaged, in axially opposite positions (with respect to the mid-plane A), to respective end edges of the carcass ply(ies) 4a, 4b. Each of the two annular anchoring structures 6 comprises a so-called bead core 6a carrying, in a radially outer position, an elastomeric filler 6b. The two annular anchoring structures 6 are integrated close to areas usually identified with the name of "beads" 7 (only the one on the axial half 2a of which is shown in figure 2), at which the engagement between the tyre 2 and a respective mounting rim usually occurs.

A crown structure is arranged in a radially outer position with respect to the carcass structure 3. The crown structure comprises a belt structure 8 and, in a radially outer position with respect to the belt structure 8, a tread band 9.

The belt structure 8 comprises radially juxtaposed belt layers 8a, 8b. The belt structure 8 can comprise a further layer, so-called zero degrees layer (not shown), in a radially outer position with respect to the aforementioned layers 8a, 8b. The belt structure 8 can also be associated with so-called "under-belt inserts" 10, each arranged between the carcass ply(ies) 4a, 4b and one of the axially opposite end edges of the belt structure 8.

Two sidewalls 11, each extending from the corresponding bead 7 to a corresponding lateral edge of the tread band 9, are applied in axially opposite positions (with respect to the mid-plane A) on the carcass ply(ies) 4a, 4b. The assembly of the portion of each sidewall 11 close to the respective lateral edge of the tread band 9 and of each portion of the tread band 9 close to the respective sidewall 11 is known as shoulder 12 of the tyre 2.

Figure 2 shows a plant 1 for producing tyres 2 for vehicle wheels according to an embodiment of the invention.

The plant 1 comprises a carcass structures building line 100, a crown structures building line 200, a shaping and assembling machine 300 for obtaining a green tyre 2' and a molding and vulcanization station 400 for obtaining the finished tyre 2.

In a normal operation of the plant 1, the carcass structures building line 100 comprises a plurality of working stations (not shown, except for the one indicated with 125 and described below) comprising respective building devices (not shown, except for the one indicated with 140 and described below) configured to build a plurality of carcass structures on respective forming drums 110 picked up from a first drum storage area 111.

In turn, the crown structures building line 200 comprises a plurality of working stations (not shown) comprising respective building devices (not shown) configured to build a plurality of crown structures on respective forming drums 210 picked up from a second drum storage area 211.

Preferably, the forming drums 110 are substantially cylindrical.

Preferably, the forming drums 210 have a geometry which is variable from cylindrical to slightly convex.

For the sake of simplicity of illustration, in figure 2 reference numerals 110 and 210 indicate both the aforementioned forming drums and the tyres being processed on such forming drums.

The carcass structures building line 100 comprises a first path 120 comprising building devices configured to deposit on the forming drum 110 a first part of structural elements of the carcass structure, such structural elements comprising at least one carcass ply.

The first path 120 of the carcass structures building line 100 comprises, for example:
- a station configured to apply a liner;
- a station configured to apply an under-liner;
- a station configured to apply a complex (formed for example of a liner, under-liner and anti-abrasion insert);
- at least one station configured to apply a carcass ply;
- an optional station configured to apply metallic and/or textile reinforcements;
- an optional station configured to apply under-belt inserts.

The carcass structures building line 100 also comprises a second path 130 comprising building devices configured to build on the forming drum 110 a second part of structural elements of the carcass structure, such structural elements comprising at least one among an anti-abrasion insert and at least one portion of sidewalls.

The second path 130 of the carcass structures building line 100 comprises, for example:
- a station configured to apply an anti-abrasion inserts by wrapping in a spiral a continuous elongated element around the first stage forming drum 110;
- an optional station configured to apply at least one portion of sidewalls by wrapping in a spiral a continuous elongated element around the first stage forming drum 110.

A working station 125 configured to form the beads of the tyre is arranged in an area between the first path 120 and the second path 130 of the carcass structures building line 100. The aforementioned working station 125 will hereinafter also be indicated with the expression "beads formation station 125". Such a station will be described below.

The carcass structures building line 100 also comprises a first transfer device 121 configured to transfer the forming drum 110 from the first path 120 to the beads formation station 125 and a second transfer device 122 configured to transfer the forming drum from the beads formation station 125 to the second path 130.

Each of such transfer devices 121, 122 can comprise an anthropomorphous robot (for example a robotized arm having at least six movement axes) or a non-anthropomorphous Cartesian movement device, which allows movements according to three Cartesian axes X, Y, Z and, preferably, a rotation around at least one, preferably two of said Cartesian axes X and Y. The axes X and Y are shown in figure 2; the axis Z being perpendicular to the axes X and Y.

Preferably, each forming drum 110 can be moved among the various working stations of the carcass structures building line 100 in a sequence which is the same as or different from the spatial sequence of such working stations.

Preferably, each forming drum 110 is moved by a shuttle (not shown) along the first path 120 of the carcass structures building line 100. The shuttle is preferably capable of moving, driven by a suitable motor, along suitable guides (preferably rectilinear) in two opposite directions of travel.

The building of the first part of components of the carcass structure is preferably carried out along the first path 120 of the carcass structures building line 100 while the forming drum 110 is associated with a pair of axially opposite support rings (not shown).

The forming drum 110 is dissociated from the aforementioned pair of support rings in the beads formation station 125 and along the second path 130 of the carcass structures building line 100.

Preferably, the first path 120 of the carcass structures building line 100 is substantially rectilinear.

The crown structures building line 200 comprises a first path 220 comprising building devices configured to build on the forming drum 210 a first part of structural elements of the crown structure, such structural elements comprising at least one belt layer.

The first path 220 of the crown structures building line 200 comprises, for example:
- an optional station configured to apply under-belt inserts (such a station is provided unless it is already comprised in the first path 120 of the carcass structures building line 100);
- at least one station configured to apply a belt layer;
- a station configured to apply an under-layer of the tread band.

The crown structures building line 200 also comprises a second path 230 comprising building devices configured to build a second part of structural elements of the crown structure, such structural elements comprising at least one tread band.

The second path 230 of the crown structures building line 200 comprises at least one of the following working stations:
- at least one station configured to apply a tread band by wrapping in a spiral a continuous elongated element around the second stage forming drum 210;
- an optional station configured to apply at least one portion of sidewalls by wrapping in a spiral a continuous elongated element around the second stage forming drum 210. This last station is at least provided either in said second path 130 of the carcass structures building line 100 or in said second path 230 of the crown structures building line 200.

Preferably, each forming drum 210 can be moved among the various working stations of the crown structures building line 200 in a sequence which is the same as or different from the spatial sequence of such working stations.

Preferably, the first path 220 of the crown structures building line 200 is substantially rectilinear.

More preferably, the first path 220 of the crown structures building line 200 is substantially parallel to the first path 120 of the carcass structures building line 100.

Preferably, the second path 230 of the crown structures building line 200 is substantially rectilinear and perpendicular to the first path 220.

The shaping and assembling machine 300 is configured to sequentially shape, one at a time, the carcass structures as they arrive from the carcass structures building line 100, and to assemble them to the respective crown structures as they arrive from the crown structures building line 200, so as to obtain respective green tyres 2'. In the specific example illustrated herein, the shaping and assembling machine 300 is configured to shape the carcass structures and to assemble them to the respective crown structures on a shaping drum 330. Therefore, it operates on carcass structures and crown structures which have been dissociated from the respective forming drums 110 and 210. Such forming drums 110 and 210 are moved to return to the respective storage areas 111 and 211.

The built green tyres 2' which exit from the shaping and assembling machine 300 are transferred to the molding and vulcanization station 400 wherein a molding and vulcanization process configured to define the structure of the tyre according to a desired geometry and tread pattern is carried out, thus obtaining the finished tyres 2.

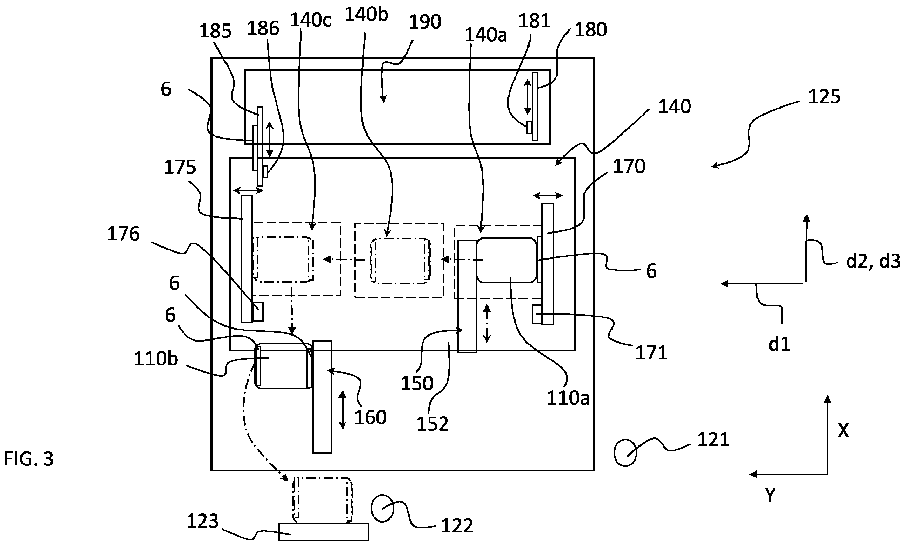

With reference to figure 3, the beads formation station 125 comprises a building device 140 configured to form the beads of the tyre. Such a building device 140 will also be indicated hereinafter with the expression "beads formation device 140".

In particular, the beads formation device 140 is configured to receive the forming drums 110 coming from the first path 120 of the carcass structures building line 100 and on which the following building activities are carried out:
- positioning of the annular anchoring structures 6 on the opposite end edges of the carcass ply(ies) 4a, 4b deposited on the forming drums 110, and
- turning of such end edges around the respective annular anchoring structures 6.

The beads formation device 140 is also configured to carry out the aforementioned building activities on such forming drums 100 and to allow the unloading of the forming drums 110 so as to be able to then transfer them to the second path 130 of the carcass structures building line 100.

In figure 3 a forming drum 110a loaded in the building device 140 and a forming drum 110b being unloaded from the building device 140 are shown with solid lines. The positions of the drums 110a, 110b at different moments during a production cycle are shown with broken lines. The forming drum 110a is intended to be subjected to the aforementioned building activities, while the forming drum 110b has already been subjected to the aforementioned building activities.

The beads formation device 140 extends along a predetermined direction d1 (shown in figure 3 and parallel to the axis Y of figure 2) and comprises a first area 140a, a second area 140b adjacent to the aforementioned first area 140a along the direction d1 and a third area 140c adjacent to the second area 140b along the direction d1. The three areas 140a, 140b and 140c are therefore aligned along the direction d1, with the first area 140a and the third area 140c arranged on opposite sides with respect to the second area 140b.

In figure 3, the aforementioned areas 140a, 140b and 140c are schematically shown inside respective dashed squares.

The beads formation station 125 also comprises a manipulator 150 configured to load the forming drums 110a, 110b in the beads formation device 140 and a manipulator 160 configured to unload the forming drums 110a, 110b from the beads formation device 140. Figure 3 shows the manipulator 150 while it loads the forming drum 110a in the first area 140a of the beads formation device 140 and the second manipulator 160 while it unloads the forming drum 110b from the third area 140c of the beads formation device 140.

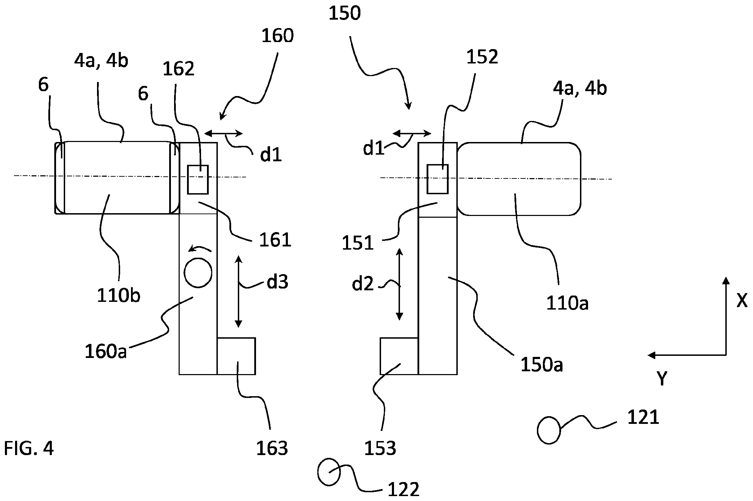

Such manipulators are shown in greater detail in figure 4. In such a figure, the manipulator 150 is shown in an operating configuration thereof in which it supports the forming drum 110a before the aforementioned building activities are carried out and the manipulator 160 is shown in an operating configuration thereof in which it supports the forming drum 110b after the aforementioned building activities have been carried out.

The carcass plies 4a, 4b have been deposited in advance on the forming drum 110a. On the forming drum 110b the end edges of the carcass plies 4a, 4b have been turned around the annular anchoring structures 6.

The manipulator 150 receives the forming drum 110a from the first transfer device 121, whereas the manipulator 160 transfers the forming drum 110b to the second transfer device 122.

As shown in figure 4, each of the two manipulators 150, 160 comprises a respective arm 150a, 160a having, at a free end portion thereof, a gripping member 151, 161 configured to pick up and support in a cantilevered manner the forming drums 110a, 110b.

Each gripping member 151, 161 is also operatively coupled to a respective motor group 152, 162 configured to set the forming drum 110a, 110b in rotation about its own rotation axis.

Each of the manipulators 150, 160 can comprise an anthropomorphous robot (for example a robotized arm having at least six movement axes) or a non-anthropomorphous Cartesian robot, which allows movements according to at least two Cartesian axes X, Y, shown in figure 3.

Preferably, at least the manipulator 160 is also configured to rotate about an its own vertical rotation axis perpendicular to the axes X and Y.

With reference to figure 3, the manipulator 150 is arranged at the interface between the first area 140a and the second area 140b of the beads formation device 140 and is moveable towards, and away from, the beads formation device 140 along a path, preferably rectilinear, between a first position in which it is completely outside the beads formation device 140 and a second operating position in which at least the gripping member 151 thereof is arranged inside the first area 140a.

The manipulator 160 is arranged at the interface between the second area 140b and the third area 140c of the beads formation device 140 and is moveable towards, and away from, the beads formation device 140 along a path, preferably rectilinear and more preferably parallel to the path of the manipulator 150, between a first position in which it is completely outside the beads formation device 140 and a second operating position in which at least the gripping member 161 thereof is arranged inside the third area 140c.

Preferably, the paths of the manipulators 150 and 160 extend along respective directions d2, d3 parallel and perpendicular to the direction d1 of extension of the beads formation device 140.

As shown in figure 4, each of the manipulators 150, 160 is associated with a respective control member 153, 163 configured to move the manipulators 150, 160 towards and away from the beads formation device 140 along the aforementioned direction d2, d3. Such control members 153, 163 are functionally independent from one another so as to allow an independent movement of each of the manipulators 150, 160 with respect to the movement of the other manipulator 160, 150.

As shown in figure 3, the beads formation device 140 comprises a first support member 170 moveable along the aforementioned direction d1 in both directions between the first area 140a and the second area 140b and a second support member 175 moveable along said direction d1 in both directions between the second area 140b and the third area 140c. Such support members 170, 175 are configured to support the forming drums 110a, 110b inside the beads formation device 140 after having been transferred from the manipulator 150 and before being transferred to the manipulator 160.

Each of the support members 170, 175 is associated with a respective control member 171, 176 configured to allow the movement of the support member 170, 175 along the aforementioned direction d1. Such control members 171, 176 are functionally independent from one another so as to allow an independent movement of each of the support members 170, 175 with respect to the movement of the other support member 175, 170.

The support member 170 is configured to pick up the forming drums 110a, 110b from the manipulator 150 in the first area 140a and to support them in a cantilevered manner in the first area 140a and during the movement from the first area 140a to the second area 140b.

The support member 175 is configured to support the forming drums 110a, 110b in the second area 140b together with the support member 170 during the aforementioned building activities and to support the forming drums 110a, 110b in a cantilevered manner during the movement from the second area 140b to the third area 140c.

Each manipulator 150, 160 comprises a respective pneumatic device (not shown) configured to provide the manipulator 150, 160, or at least the respective gripping member 151, 161, with a movement along the direction d2 suitable for compensating possible thrusts to which the forming drums 110a, 110b are subjected when they are transferred to the support member 170 or picked up from the support member 175.

As shown in figure 3, the beads formation station 125 also comprises a feeding device 190 configured to feed the annular anchoring structures 6 to be positioned on the forming drums 110a, 110b.

Such a feeding device 190 is adjacent to the beads formation device 140 and comprises a pair of gripping and centering members (not shown), each of them being configured to center an annular anchoring structure 6 of the pair of annular anchoring structures 6 to be positioned on the forming drums 110a, 110b.

The feeding device 190 also comprises a pair of loaders 180, 185 configured to cooperate with the aforementioned gripping and centering members, each one to pick up the respective annular anchoring structure 6 from the respective gripping and centering member and bring such an annular anchoring structure 6 inside the beads formation device 140.

The loader 180 is arranged at the first area 140a of the beads formation device 140 and is moveable towards, and away from, the beads formation device 140 along a path, preferably rectilinear and parallel to the aforementioned direction d2, d3, between a first position in which it is completely outside the beads formation device 140 and a second operating position in which it is inside the first area 140a.

The loader 185 is arranged at the third area 140c of the beads formation device 140 and is moveable towards, and away from, the beads formation device 140 along a path, preferably rectilinear and more preferably parallel to the path of the loader 180, between a first position in which it is completely outside the beads formation device 140 and a second operating position in which it is inside the third area 140c.

Each of the loaders 180, 185 is associated with a respective control member 181, 186 configured to move the loaders 180, 185 towards and away from the beads formation device 140. Such control members 181, 186 are functionally independent from one another so as to allow an independent movement of each of the loaders 180, 185 with respect to the movement of the other loader 185, 180.

The first area 140a of the beads formation device 140 is therefore dedicated both to the loading of the forming drums 110a, 110b in the beads formation device 140 by the manipulator 150 and to the loading of a first annular anchoring structure 6 in the beads formation device 140 by the loader 180. Said first annular anchoring structure 6 is transferred to the support member 170 provided in the aforementioned first area 140a to then be transported by such a support member 170 in the second area 140b together with the forming drum 110a, 110b to proceed with the building activity described above. The gripping of the forming drum 110a, 110b by the support member 171 occurs after said first annular anchoring structure 6 has been loaded on the support member 170.

The second area 140b is unequivocally dedicated to carrying out the aforementioned building activity. In the second area 140b the forming drum 110a, 110b is supported by both the support members 170, 175. In such a second area 140b at first the positioning of the annular anchoring structures 6 on the end edges of the carcass ply(ies) deposited on the forming drum 110a, 110b occurs and then the turning of each of the aforementioned end edges around the respective annular anchoring structure 6 occurs.

The third area 140c of the bead formation device 140 is dedicated both to the unloading of the forming drums 110a, 110b from the beads formation device 140 by the manipulator 160 and to the loading of a second annular anchoring structure 6 in the beads formation device 140 by the loader 185. Said second annular anchoring structure 6 is transferred from the loader 185 to the support member 175 provided in the third area 140c of the beads formation device 140 to then be transported from by such a support member 175 in the second area 140b in order to subsequently carry out the building activities described above. At the end of such activities the support member 175 supports the forming drum 110a, 110b and moves it to the third area 140c while the support member 170 goes back to the first area 140a without the forming drum 110a, 110b.

The working station 125 also comprises an exit station 123 on which the manipulator 160 places the forming drum 110a, 110b unloaded by the beads formation device 140 and from which the transfer device 122 picks up the forming drum 110a, 110b to feed it to the second path 130 of the carcass structures building line 100.

The plant 2 described above allows a method for producing tyres for vehicle wheels to be carried out, said method comprising many building activities of structural components of tyres.

Among these activities there are those relative to the formation of the opposite beads of the tyre. Such beads formation activities are carried out in the working station 125 by carrying out a building process in which at least some of the actions being carried out are performed simultaneously with other actions.

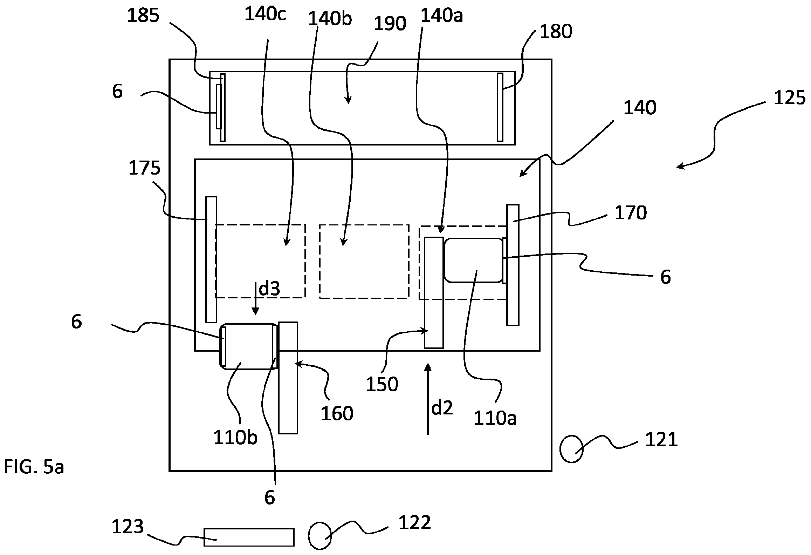

One embodiment of such a building process is described hereinafter with reference to figures 5a-5f.

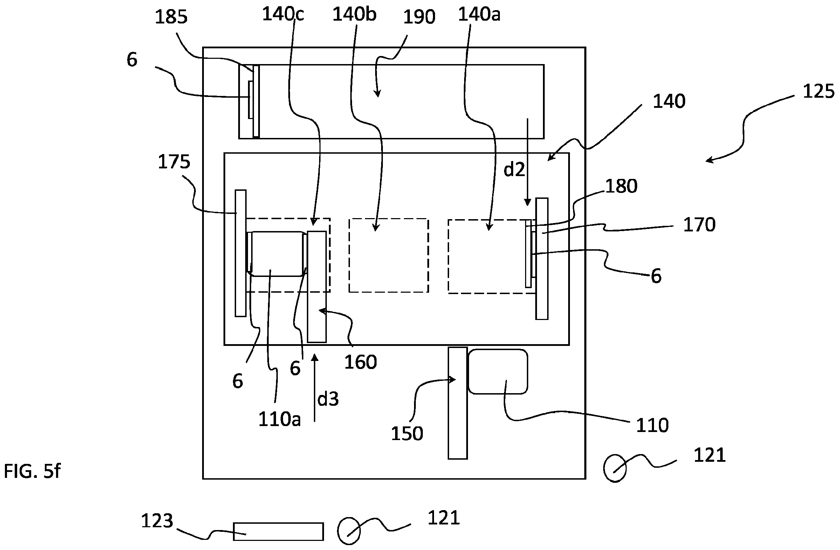

In an operating configuration prior to the one shown in figure 5a (and corresponding to the one described below with reference to figure 5f), and thus before the manipulator 150 enters into the aforementioned first area 140a of the beads formation device 140 to transfer a forming drum 110a to the support member 170, a forming drum 110b on which the aforementioned building activities have already been carried out is in the third area 140c of the beads formation device 140 , supported by the support member 175, and the loader 180 has loaded a first annular anchoring structure 6 on the support member 170 arranged in the first area 140a of the beads formation device 140. Thereafter, the loader 180 is moved along the direction d2 to exit from the beads formation device 140 and reach the position shown in figure 5a, the manipulator 150 is moved along the direction d2 to enter into the first area 140a of the beads formation device 140, reach the position shown in figure 5a and load the forming drum 110a on the support member 170, the manipulator 160 is moved along the direction d3 to enter in the third area 140c of the beads formation device 140 and pick up the forming drum 110b from the support member 175 and the loader 185, arranged outside the formation device 140 beads, picks up a second annular anchoring structure 6.

At this point the working station 125 takes the operating configuration shown in figure 5a. In such an operating configuration the manipulator 160 has picked up the forming drum 110b from the support member 175 and is unloading it from the third area 140c of the beads formation device 140.

At least in part simultaneously with the unloading of the forming drum 110b, the manipulator 150 loads the forming drum 110a on which the beads formation activities will have to be carried out on the support member 170.

Preferably, during the unloading of the forming drum 110b and the loading of the forming drum 110a the forming drums 110a, 110b are set in rotation about their rotation axes.

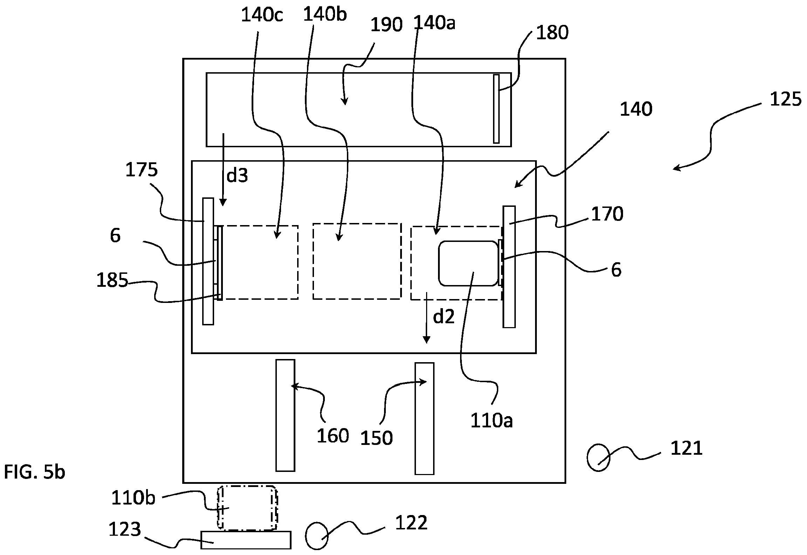

Thereafter, as shown in figure 5b, the manipulator 150 is moved along the direction d2 to exit from the beads formation device 140, leaving the forming drum 110a supported solely by the support member 170. At least in part simultaneously with this movement, the loader 185 is moved along the direction d3 to enter into the beads formation device 140 and load said second annular anchoring structure 6 on the support member 175. At least in part simultaneously with at least part of at least one of the aforementioned movements, the manipulator 160 places the forming drum 110b on the exit station 123.

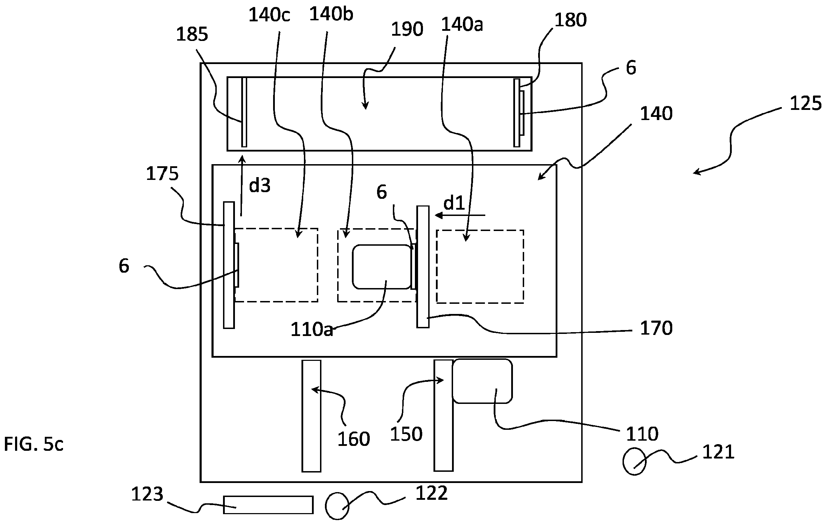

Thereafter, as shown in figure 5c, the support member 170 is moved from the first area 140a to the second area 140b of the beads formation device 140 along the direction d1, carrying the forming drum 110a and the first annular anchoring structure 6 with it. At least in part simultaneously with this movement, the loader 185 is moved out from the beads formation device 140, thus returning to the initial position of figure 5a. At least in part simultaneously with the aforementioned movements of the support member 170 and/or of the loader 185, or at the end of such movements, a new forming drum (indicated with 110 in figure 5c) can be loaded on the manipulator 150 by the transfer member 121. At least in part simultaneously with the aforementioned movements of the support member 170 and/or of the loader 185, or at the end of such movements, the loader 180 can pick up a new first annular anchoring structure 6. At least in part simultaneously with the aforementioned movements of the support member 170 and/or of the loader 185, or at the end of such movements, the forming drum 110b can be picked up from the exit station 123 by the transfer device 122.

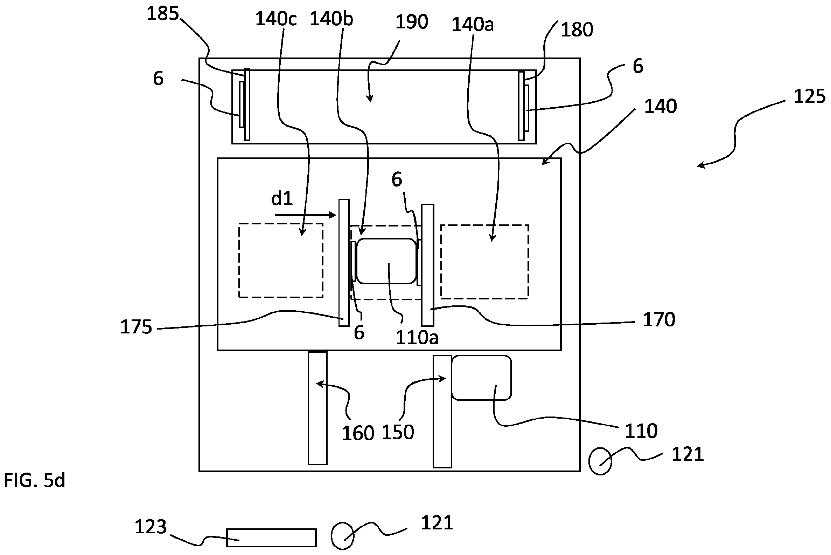

Subsequently, as shown in figure 5d, the support member 175 is moved from the third area 140c to the second area 140b of the beads formation device 140 along the direction d1, carrying the second annular anchoring structure 6 with it. Once the aforementioned second area 140b has been reached the support member 175 is coupled to the forming drum 110a. The latter is thus supported on opposite sides respectively by the support member 170 and by the support member 175. The manipulators 150 and 160 and the loaders 180 and 185 are all outside of the beads formation device 140.

At this point the building activities can begin in the second area 140b of the beads formation device 140. Such activities comprise the positioning of the annular anchoring structures 6 on the end edges of the carcass plies 4a, 4b deposited on the forming drum 110a and the turning of such end edges around the aforementioned annular anchoring structures 6. Preferably, in order to allow the positioning of the annular anchoring structures 6 on the end edges of the carcass plies 4a, 4b by an axial movement of the positioning members suitably provided, the axially outer portions of such end edges are previously lowered towards the rotation axis of the forming drum 110a by suitable ply lowering members.

At least in part simultaneously with the aforementioned building activities, or at the end of such activities, the loader 185 can pick up a new second annular anchoring structure 6.

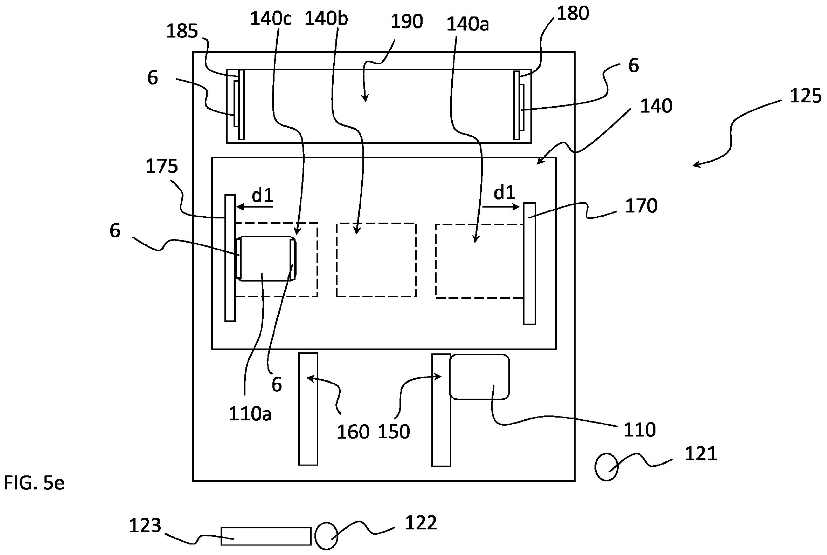

Thereafter, as shown in figure 5e, the forming drum 110a (which has, at this point, the end edges of the carcass plies 4a, 4b turned around the respective annular anchoring structures 6) is dissociated from the support member 170 and remains associated solely with the support member 175. The support members 170 and 175 are therefore moved along the direction d1 from the second area 140b of the beads formation device 140 until the first area 140a and the third area 140c of the beads formation device 140 are reached, respectively.

Thereafter, as shown in figure 5f, the manipulator 160 is moved along the direction d3 to enter into the beads formation device 140 and pick up the forming drum 110a from the support member 175. At least in part simultaneously with such a movement, the loader 180 is moved along the direction d2 to enter into the beads formation device 140 and load the new first annular anchoring structure 6 on the support member 170.

Thereafter, the loader 180 is moved along the direction d2 to exit from the beads formation device 140 and reach the position shown in figure 5a, the manipulator 150 is moved along the direction d2 to enter into the first area 140a of the beads formation device 140, reach the position shown in figure 5a and load the forming drum 110a on the support member 170.

At this point the working station 125 takes once again the operating configuration shown in figure 5a and the production cycle thereof can proceed as described above with reference to figures 5a-5f.

The present invention has been described with reference to some preferred embodiments. Different changes can be made to the embodiments described above, while remaining within the scope of protection of the invention defined by the following claims.

## Claims

1. Method for producing tyres for vehicle wheels, comprising building a plurality of structural components (3) of tyres (2) on respective forming drums (110a, 110b) in a predetermined working station (125), wherein building said plurality of structural components (3) comprises the following actions:
- loading a first forming drum (110b) in a first area (140a) of a building device (140) provided in said working station (125) by a first manipulator (150);
- moving said first forming drum (110b) from said first area (140a) to a second area (140b) of said building device (140);
- carrying out at least one building activity for building a first structural component (3) of a first tyre on said first forming drum (110b) in said second area (140b);
- after having carried out said at least one building activity on said first forming drum (110b), moving said first forming drum (110b) from said second area (140b) to a third area (140c) of said building device (140) arranged on an opposite side to said first area (140a) with respect to said second area (140b);
- unloading said first forming drum (110b) from said third area (140c) by a second manipulator (160).

2. Method according to claim 1, wherein building said plurality of structural components comprises, after the action of moving said first forming drum (110b) from said second area (140b) to said third area (140c), the following action:
- loading a first tyre structural element in said first area (140a) by a first loader (180).

3. Method according to claim 2, wherein building said plurality of structural components comprises, after the action of loading said first tyre structural element in said first area (140a), the following action:
- moving said first loader (180) from a respective first position in which said first loader (180) is arranged at least partially in said first area (140a) to a respective second position in which said first loader (180) is arranged totally outside of said building device (140).

4. Method according to claim 2 or 3, wherein building said plurality of structural components further comprises the following action:
- loading a second tyre structural element in said third area (140c) by a second loader (185) functionally independent from the first loader (180);
wherein the action of loading said second tyre structural element in said third area (140c) is carried out at least in part simultaneously with the action of unloading said first forming drum (110b) from said third area (140c).

5. Method according to any one of the previous claims, wherein said first area (140a), second area (140b) and third area (140c) are aligned along a first direction (d1) of extension of said building device (140).

6. Method according to claim 3 or any one of claims 4 and 5 when depending on claim 3, wherein the action of loading said first forming drum (110b) in said first area (140a) by said first manipulator (150) comprises the following action:
- moving said first manipulator (150) along a second direction (d2) from a respective first position in which said first manipulator (150) is arranged totally outside of said building device (140) to a respective second position in which said first manipulator (150) is arranged partially inside said building device (140);
wherein the action of moving said first manipulator (150) from said respective first position to said respective second position is carried out at least in part simultaneously with the action of moving said first loader (180) from said respective first position to said respective second position.

7. Method according to claim 6 when depending on claim 5, wherein the action of loading said first forming drum (110b) in said first area (140a) by said first manipulator (150) comprises the action of transferring said first forming drum (110b) to a first support member (170) arranged in said first area (140a) and moveable along said first direction (d1) between said first area (140a) and said second area (140b).

8. Method according to claim 6 or 7, wherein the action of unloading said first forming drum (110b) from said third area (140c) by said second manipulator (160) comprises the action of moving said second manipulator (160) along a third direction (d3) parallel to said second direction (d2) from a respective first position in which said second manipulator (160) is arranged partially inside said building device (140) to a respective second position in which said second manipulator (160) is arranged totally outside of said building device (140).

9. Method according to any one of the previous claims, wherein said structural components are carcass structures (3), said working station (125) is a carcass structures building station, said building device (140) is a tyre bead formation device and said at least one building activity comprises:
- positioning an annular anchoring structure (6) at each of opposite end edges of at least one carcass ply (4a, 4b) deposited on said first forming drum (110b);
- turning each of said end edges around the respective annular anchoring structure (6).

10. Method according to any one of the previous claims, wherein building said plurality of structural components (3) comprises the following actions:
- loading a second forming drum (110a) in said first area (140a) by said first manipulator (150);
- moving said second forming drum (110a) from said first area (140a) to said second area (140b);
- carrying out at least one building activity for building a first structural component (3) of a second tyre on said second forming drum (110a) in said second area (140b);
- after having carried out said at least one building activity on said second forming drum (110a), moving said second forming drum (110a) from said second area (140b) to said third area (140c);
- unloading said second forming drum (110a) from said third area (140c) by said second manipulator (160);
wherein the action of unloading said first forming drum (110b) from said third area (140c) by said second manipulator (160) is carried out at least in part simultaneously with the action of loading said second forming drum (110a) in said first area (140a) by said first manipulator (150).

11. Plant (1) for producing tyres for vehicle wheels, comprising at least one working station (125) in which a plurality of structural components of tyres is built on respective forming drums (110a, 110b), wherein said at least one working station (125) comprises:
- a building device (140) comprising a first area (140a) configured to load a forming drum (110a, 110b), a second area (140b) configured to carry out at least one building activity for building a first structural component of a first tyre on said forming drum (110a, 110b), and a third area (140c) configured to unload said forming drum (110a, 110b), said third area (140c) being arranged on an opposite side to said first area (140a) with respect to said second area (140b);
- a first manipulator (150) moveable towards and from said building device (140) at said first area (140a) to load said forming drum (110a, 110b) in said first area (140a);
- a second manipulator (160) moveable towards and from said building device (140) at said third area (140c) to unload said forming drum (110a, 110b) from said third area (140c).

12. Plant (1) according to claim 11, wherein said first manipulator (150) is operatively coupled to a first motor group (152) configured to set said forming drum (110a, 110b) in rotation about its rotation axis when said forming drum (110a, 110b) is coupled to said first manipulator (150) and wherein said second manipulator (160) is operatively coupled to a second motor group (162) configured to set said forming drum (110a, 110b) in rotation about its rotation axis when said forming drum (110a, 110b) is coupled to said second manipulator (160).

13. Plant (1) according to claim 11 or 12, wherein said building device (140) comprises:
- a first support member (170) configured to support said forming drum (110a, 110b) in a canti-levered manner;
- a second support member (175) configured to support said forming drum (110a, 110b) in a canti-levered manner.

14. Plant (1) according to any one of claims 11 to 13, wherein said at least one working station (125) comprises:
- a first loader (180) moveable between a respective position in which said first loader (180) is arranged totally outside of said building device (140) and a respective position in which said first loader (180) is arranged at least partially in said first area (140a) to load a first tyre structural element in said first area (140a);
- a second loader (185) functionally independent from the first loader (180) and moveable between a respective position in which said second loader (185) is arranged totally outside of said building device (140) and a respective position in which said second loader (185) is arranged at least partially in said third area (140c) to load a second tyre structural element in said third area (140c).

15. Plant (1) according to any one of claims 11 to 14, wherein said first area (140a), second area (140b) and third area (140c) are aligned along a first direction (d1) of extension of said building device (140), said first manipulator (150) is moveable along a second direction (d2) perpendicular to said first direction (d1) between a respective position in which said first manipulator (150) is arranged totally outside of said building device (140) and a respective position in which said first manipulator (150) is arranged partially inside of said building device (140), and said second manipulator (160) is moveable along a third direction (d3) parallel to said second direction (d2) between a respective position in which said second manipulator (160) is arranged totally outside of said building device (140) and a respective position in which said second manipulator (160) is arranged partially inside of said building device (140).

## Patentansprüche

1. Verfahren zum Herstellen von Reifen für Fahrzeugräder, umfassend das Bauen einer Vielzahl von Strukturkomponenten (3) von Reifen (2) an jeweiligen Formungstrommeln (110a, 110b) in einer vorbestimmten Arbeitsstation (125), wobei das Bauen der Vielzahl von Strukturkomponenten (3) die folgenden Handlungen umfasst:
- Laden einer ersten Formungstrommel (110b) in einem ersten Bereich (140a) einer Bauvorrichtung (140), die in der Arbeitsstation (125) bereitgestellt ist, durch einen ersten Manipulator (150);
- Bewegen der ersten Formungstrommel (110b) von dem ersten Bereich (140a) zu einem zweiten Bereich (140b) der Bauvorrichtung (140);
- Ausführen von mindestens eine Bauaktivität zum Bauen einer ersten Strukturkomponente (3) eines ersten Reifens an der ersten Formungstrommel (110b) in dem zweiten Bereich (140b);
- nachdem die mindestens eine Bauaktivität an der ersten Formungstrommel (110b) ausgeführt wurde, Bewegen der ersten Formungstrommel (110b) von dem zweiten Bereich (140b) zu einem dritten Bereich (140c) der Bauvorrichtung (140), der auf einer gegenüberliegenden Seite des ersten Bereichs (140a) in Bezug auf den zweiten Bereich (140b) angeordnet ist;
- Entladen der ersten Formungstrommel (110b) aus dem dritten Bereich (140c) durch einen zweiten Manipulator (160).

2. Verfahren nach Anspruch 1, wobei das Bauen der Vielzahl von Strukturkomponenten, nach der Handlung des Bewegens der ersten Formungstrommel (110b) von dem zweiten Bereich (140b) zu dem dritten Bereich (140c), die folgende Handlung umfasst:
- Laden eines ersten Reifenstrukturelements in dem ersten Bereich (140a) durch einen ersten Lader (180).

3. Verfahren nach Anspruch 2, wobei das Bauen der Vielzahl von Strukturkomponenten, nach der Handlung des Ladens des ersten Reifenstrukturelements in dem ersten Bereich (140a), die folgende Handlung umfasst:
- Bewegen des ersten Laders (180) von einer jeweiligen ersten Position, in der der erste Lader (180) mindestens teilweise in dem ersten Bereich (140a) angeordnet ist, zu einer jeweiligen zweiten Position, in der der erste Lader (180) vollständig außerhalb der Bauvorrichtung (140) angeordnet ist.

4. Verfahren nach Anspruch 2 oder 3, wobei das Bauen der Vielzahl von Strukturkomponenten ferner die folgende Handlung umfasst:
- Laden eines zweiten Reifenstrukturelements in dem dritten Bereich (140c) durch einen zweiten Lader (185), der von dem ersten Lader (180) strukturell unabhängig ist;
wobei die Handlung des Ladens des zweiten Reifenstrukturelements in dem dritten Bereich (140c) mindestens teilweise gleichzeitig mit der Handlung des Entladens der ersten Formungstrommel (110b) aus dem dritten Bereich (140c) ausgeführt wird.

5. Verfahren nach einem der vorhergehenden Ansprüche, wobei der erste Bereich (140a), der zweite Bereich (140b) und der dritte Bereich (140c) entlang einer ersten Richtung (d1) der Erweiterung der Bauvorrichtung (140) ausgerichtet sind.

6. Verfahren nach Anspruch 3 oder einem aus Ansprüchen 4 und 5, wenn abhängig von Anspruch 3, wobei die Handlung des Ladens der ersten Formungstrommel (110b) in dem ersten Bereich (140a) durch den ersten Manipulator (150) die folgende Handlung umfasst:
- Bewegen des ersten Manipulators (150) entlang einer zweiten Richtung (d2) von einer jeweiligen ersten Position, in der der erste Manipulator (150) vollständig außerhalb der Bauvorrichtung (140) angeordnet ist, zu einer jeweiligen zweiten Position, in der der erste Manipulator (150) teilweise innerhalb der Bauvorrichtung (140) angeordnet ist;
wobei die Handlung des Bewegens des ersten Manipulators (150) von der jeweiligen ersten Position zu der jeweiligen zweiten Position mindestens teilweise gleichzeitig mit der Handlung des Bewegens des ersten Laders (180) von der jeweiligen ersten Position zu der jeweiligen zweiten Position ausgeführt wird.

7. Verfahren nach Anspruch 6, wenn abhängig von Anspruch 5, wobei die Handlung des Ladens der ersten Formungstrommel (110b) in dem ersten Bereich (140a) durch den ersten Manipulator (150) die Handlung des Übertragens der ersten Formungstrommel (110b) zu einem ersten Stützelement (170) umfasst, das in dem ersten Bereich (140a) angeordnet ist und entlang der ersten Richtung (d1) zwischen dem ersten Bereich (140a) und dem zweiten Bereich (140b) bewegt werden kann.

8. Verfahren nach Anspruch 6 oder 7, wobei die Handlung des Entladens der ersten Formungstrommel (110b) von dem dritten Bereich (140c) durch den zweiten Manipulator (160) die Handlung des Bewegens des zweiten Manipulators (160) entlang einer dritten Richtung (d3) parallel zu der zweiten Richtung (d2) von einer jeweiligen ersten Position, in der der zweite Manipulator (160) teilweise innerhalb der Bauvorrichtung (140) angeordnet ist, zu einer jeweiligen zweiten Position, in der der zweite Manipulator (160) vollständig außerhalb der Bauvorrichtung (140) angeordnet ist, umfasst.

9. Verfahren nach einem der vorhergehenden Ansprüche, wobei die Strukturkomponenten Karkassenstrukturen (3) sind, die Arbeitsstation (125) eine Karkassenstrukturen-Baustation ist, die Bauvorrichtung (140) eine Reifenwulstformungsvorrichtung ist und die mindestens eine Bauaktivität Folgendes umfasst:
- Positionieren einer ringförmigen Verankerungsstruktur (6) an jeder von gegenüberliegenden Endkanten von mindestens einer Karkasslage (4a, 4b), die an der ersten Formungstrommel (110b) angeordnet ist;
- Drehen von jeder der Endkanten um die jeweilige ringförmige Ankerstruktur (6).

10. Verfahren nach einem der vorhergehenden Ansprüche, wobei das Bauen der Vielzahl von Strukturkomponenten (3) die folgenden Handlungen umfasst:
- Laden einer zweiten Formungstrommel (110a) in dem ersten Bereich (140a) durch den ersten Manipulator (150);
- Bewegen der zweiten Formungstrommel (110a) von dem ersten Bereich (140a) zu einem zweiten Bereich (140b);
- Ausführen von mindestens eine Bauaktivität zum Bauen einer ersten Strukturkomponente (3) eines zweiten Reifens an der zweiten Formungstrommel (110a) in dem zweiten Bereich (140b);
- nachdem die mindestens eine Bauaktivität an der zweiten Formungstrommel (110a) ausgeführt wurde, Bewegen der zweiten Formungstrommel (110a) von dem zweiten Bereich (140b) zu dem dritten Bereich (140c);
- Entladen der zweiten Formungstrommel (110a) aus dem dritten Bereich (140c) durch den zweiten Manipulator (160);
wobei die Handlung des Entladens der ersten Formungstrommel (110b) aus dem dritten Bereich (140c) durch den zweiten Manipulator (160) mindestens teilweise gleichzeitig mit der Handlung des Ladens der zweiten Formungstrommel (110a) in dem ersten Bereich (140a) durch den ersten Manipulator (150) ausgeführt wird.

11. Anlage (1) zum Herstellen von Reifen für Fahrzeugräder, umfassend mindestens eine Arbeitsstation (125), in der eine Vielzahl von Strukturkomponenten von Reifen an jeweiligen Formungstrommeln (110a, 110b) gebaut wird, wobei die mindestens eine Arbeitsstation (125) Folgendes umfasst:
- eine Bauvorrichtung (140), umfassend einen ersten Bereich (140a), der konfiguriert ist, um eine Formungstrommel (110a, 110b) zu laden, einen zweiten Bereich (140b), der konfiguriert ist, um mindestens eine Bauaktivität zum Bauen einer ersten Strukturkomponente eines ersten Reifens an der Formungstrommel (110a, 110b) auszuführen, und einen dritten Bereich (140c), der konfiguriert ist, um die Formungstrommel (110a, 110b) zu entladen, wobei der dritte Bereich (140c) auf einer gegenüberliegenden Seite zu dem ersten Bereich (140a) in Bezug auf den zweiten Bereich (140b) angeordnet ist;
- einen ersten Manipulator (150), der zu der Bauvorrichtung (140) an dem ersten Bereich (140a) hin und davon weg bewegt werden kann, um die Formungstrommel (110a, 110b) in dem ersten Bereich (140a) zu laden;
- einen zweiten Manipulator (160), der zu der Bauvorrichtung (140) an dem dritten Bereich (140c) hin und davon weg bewegt werden kann, um die Formungstrommel (110a, 110b) aus dem dritten Bereich (140c) zu entladen.

12. Anlage (1) nach Anspruch 11, wobei der erste Manipulator (150) operativ an eine erste Motorgruppe (152) gekoppelt ist, die konfiguriert ist, um die Formungstrommel (110a, 110b) in Drehung um ihre Drehachse zu versetzen, wenn die Formungstrommel (110a, 110b) an den ersten Manipulator (150) gekoppelt ist, und wobei der zweite Manipulator (160) operativ an eine zweite Motorgruppe (162) gekoppelt ist, die konfiguriert ist, um die Formungstrommel (110a, 110b) in Drehung um ihre Drehachse zu versetzen, wenn die Formungstrommel (110a, 110b) an den zweiten Manipulator (160) gekoppelt ist.

13. Anlage (1) nach Anspruch 11 oder 12, wobei die Bauvorrichtung (140) Folgendes umfasst:
- ein erstes Stützelement (170), das konfiguriert ist, um die Formungstrommel (110a, 110b) auf eine freitragende Weise zu stützen;
- ein zweites Stützelement (175), das konfiguriert ist, um die Formungstrommel (110a, 110b) auf eine freitragende Weise zu stützen.

14. Anlage (1) nach einem der Ansprüche 11 bis 13, wobei die mindestens eine Arbeitsstation (125) Folgendes umfasst:
- einen ersten Lader (180), der zwischen einer jeweiligen Position, in der der erste Lader (180) vollständig außerhalb der Bauvorrichtung (140) angeordnet ist, und einer jeweiligen Position, in der der erste Lader (180) mindestens teilweise in dem ersten Bereich (140a) angeordnet ist, bewegt werden kann, um ein erstes Reifenstrukturelement in dem ersten Bereich (140a) zu laden;
- einen zweiten Lader (185), der von dem ersten Lader (180) funktional unabhängig ist und der zwischen einer jeweiligen Position, in der der zweite Lader (185) vollständig außerhalb der Bauvorrichtung (140) angeordnet ist, und einer jeweiligen Position, in der der zweite Lader (185) mindestens teilweise in dem dritten Bereich (140c) angeordnet ist, bewegt werden kann, um ein zweites Reifenstrukturelement in dem dritten Bereich (140c) zu laden.

15. Anlage (1) nach einem der Ansprüche 11 bis 14, wobei der erste Bereich (140a), der zweite Bereich (140b) und der dritte Bereich (140c) entlang einer ersten Richtung (d1) der Erweiterung der Bauvorrichtung (140) ausgerichtet sind, der erste Manipulator (150) entlang einer zweiten Richtung (d2) senkrecht zu der ersten Richtung (d1) zwischen einer jeweiligen Position, in der der erste Manipulator (150) vollständig außerhalb der Bauvorrichtung (140) angeordnet ist, und einer jeweiligen Position, in der der erste Manipulator (150) teilweise innerhalb der Bauvorrichtung (140) angeordnet ist, bewegt werden kann, und der zweite Manipulator (160) entlang einer dritten Richtung (d3) parallel zu der zweiten Richtung (d2) zwischen einer jeweiligen Position, in der der zweite Manipulator (160) vollständig außerhalb der Bauvorrichtung (140) angeordnet ist, und einer jeweiligen Richtung, in der der zweite Manipulator (160) teilweise innerhalb der Bauvorrichtung (140) angeordnet ist, bewegt werden kann.

## Revendications

1. Procédé pour produire des pneus pour des roues de véhicule, comprenant la confection d'une pluralité de composants structuraux (3) de pneus (2) sur des tambours de formation respectifs (110a, 110b) dans une station d'usinage prédéterminée (125), dans lequel la confection de ladite pluralité de composants structuraux (3) comprend les actions suivantes :
- le chargement d'un premier tambour de formation (110b) dans une première zone (140a) d'un dispositif de confection (140), prévu dans ladite station d'usinage (125), par un premier manipulateur (150) ;
- le déplacement dudit premier tambour de formation (110b) depuis ladite première zone (140a) jusqu'à une deuxième zone (140b) dudit dispositif de confection (140) ;
- la réalisation d'au moins une activité de confection pour confectionner un premier composant structural (3) d'un premier pneu sur ledit premier tambour de formation (110b) dans ladite deuxième zone (140b) ;
- après avoir réalisé ladite au moins une activité de confection sur ledit premier tambour de formation (110b), le déplacement dudit premier tambour de formation (110b) depuis ladite deuxième zone (140b) jusqu'à une troisième zone (140c) dudit dispositif de confection (140) agencé sur un côté opposé à ladite première zone (140a) par rapport à ladite deuxième zone (140b) ;
- le déchargement dudit premier tambour de formation (110b) à partir de ladite troisième zone (140c), par un second manipulateur (160).

2. Procédé selon la revendication 1, dans lequel la confection de ladite pluralité de composants structuraux comprend, après l'action du déplacement dudit premier tambour de formation (110b) depuis ladite deuxième zone (140b) jusqu'à ladite troisième zone (140c), l'action suivante :
- le chargement d'un premier élément structural de pneu dans ladite première zone (140a) par un premier chargeur (180).

3. Procédé selon la revendication 2, dans lequel la confection de ladite pluralité de composants structuraux comprend, après l'action du chargement dudit premier élément structural de pneu dans ladite première zone (140a), l'action suivante :
- le déplacement dudit premier chargeur (180) depuis une première position respective dans laquelle ledit premier chargeur (180) est agencé au moins partiellement dans ladite première zone (140a) jusqu'à une seconde position respective dans laquelle ledit premier chargeur (180) est agencé totalement à l'extérieur dudit dispositif de confection (140).

4. Procédé selon la revendication 2 ou 3, dans lequel la confection de ladite pluralité de composants structuraux comprend en outre l'action suivante :
- le chargement d'un second élément structural de pneu dans ladite troisième zone (140c), par un second chargeur (185) fonctionnellement indépendant du premier chargeur (180) ;
dans lequel l'action du chargement dudit second élément structural de pneu dans ladite troisième zone (140c) est réalisée au moins en partie simultanément avec l'action du déchargement dudit premier tambour de formation (110b) à partir de ladite troisième zone (140c).

5. Procédé selon l'une quelconque des revendications précédentes, dans lequel lesdites première zone (140a), deuxième zone (140b) et troisième zone (140c) sont alignées le long d'une première direction (d1) d'extension dudit dispositif de confection (140).

6. Procédé selon la revendication 3 ou l'une quelconque des revendications 4 et 5 lorsqu'elle dépend de la revendication 3, dans lequel l'action du chargement dudit premier tambour de formation (110b) dans ladite première zone (140a), par ledit premier manipulateur (150), comprend l'action suivante :
- le déplacement dudit premier manipulateur (150) le long d'une deuxième direction (d2) depuis une première position respective dans laquelle ledit premier manipulateur (150) est agencé totalement à l'extérieur dudit dispositif de confection (140) jusqu'à une seconde position respective dans laquelle ledit premier manipulateur (150) est agencé partiellement à l'intérieur dudit dispositif de confection (140) ;
dans lequel l'action du déplacement dudit premier manipulateur (150) depuis ladite première position respective jusqu'à ladite seconde position respective est réalisée au moins en partie simultanément avec l'action du déplacement dudit premier chargeur (180) depuis ladite première position respective jusqu'à ladite seconde position respective.

7. Procédé selon la revendication 6 lorsqu'elle dépend de la revendication 5, dans lequel l'action du chargement dudit premier tambour de formation (110b) dans ladite première zone (140a), par ledit premier manipulateur (150), comprend l'action du transfert dudit premier tambour de formation (110b) à un premier organe de support (170) agencé dans ladite première zone (140a) et déplaçable le long de ladite première direction (d1) entre ladite première zone (140a) et ladite deuxième zone (140b).

8. Procédé selon la revendication 6 ou 7, dans lequel l'action du déchargement dudit premier tambour de formation (110b) à partir de ladite troisième zone (140c), par ledit second manipulateur (160), comprend l'action du déplacement dudit second manipulateur (160) le long d'une troisième direction (d3) parallèle à ladite deuxième direction (d2) depuis une première position respective dans laquelle ledit second manipulateur (160) est agencé partiellement à l'intérieur dudit dispositif de confection (140) jusqu'à une seconde position respective dans laquelle ledit second manipulateur (160) est agencé totalement à l'extérieur dudit dispositif de confection (140).

9. Procédé selon l'une quelconque des revendications précédentes, dans lequel lesdits composants structuraux sont des structures de carcasse (3), ladite station d'usinage (125) est une station de confection de structures de carcasse, ledit dispositif de confection (140) est un dispositif de formation de talon de pneu et ladite au moins une activité de confection comprend :
- le positionnement d'une structure d'ancrage annulaire (6) à chacun de bords d'extrémité opposés d'au moins un pli de carcasse (4a, 4b) déposé sur ledit premier tambour de formation (110b) ;
- le retournement de chacun desdits bords d'extrémité autour de la structure d'ancrage annulaire respective (6).

10. Procédé selon l'une quelconque des revendications précédentes, dans lequel la confection de ladite pluralité de composants structuraux (3) comprend les actions suivantes :
- le chargement d'un second tambour de formation (110a) dans ladite première zone (140a), par ledit premier manipulateur (150) ;
- le déplacement dudit second tambour de formation (110a) depuis ladite première zone (140a) jusqu'à ladite deuxième zone (140b) ;
- la réalisation d'au moins une activité de confection pour confectionner un premier composant structural (3) d'un second pneu sur ledit second tambour de formation (110a) dans ladite deuxième zone (140b) ;
- après avoir réalisé ladite au moins une activité de confection sur ledit second tambour de formation (110a), le déplacement dudit second tambour de formation (110a) depuis ladite deuxième zone (140b) jusqu'à ladite troisième zone (140c) ;
- le déchargement dudit second tambour de formation (110a) à partir de ladite troisième zone (140c), par ledit second manipulateur (160) ;
dans lequel l'action du déchargement dudit premier tambour de formation (110b) à partir de ladite troisième zone (140c), par ledit second manipulateur (160), est réalisée au moins en partie simultanément avec l'action du chargement dudit second tambour de formation (110a) dans ladite première zone (140a), par ledit premier manipulateur (150).

11. Usine (1) pour produire des pneus pour des roues de véhicule, comprenant au moins une station d'usinage (125) dans laquelle une pluralité de composants structuraux de pneus est confectionnée sur des tambours de formation respectifs (110a, 110b), dans laquelle ladite au moins une station d'usinage (125) comprend :
- un dispositif de confection (140) comprenant une première zone (140a) configurée pour charger un tambour de formation (110a, 110b), une deuxième zone (140b) configurée pour réaliser au moins une activité de confection pour confectionner un premier composant structural d'un premier pneu sur ledit tambour de formation (110a, 110b), et une troisième zone (140c) configurée pour décharger ledit tambour de formation (110a, 110b), ladite troisième zone (140c) étant agencée sur un côté opposé à ladite première zone (140a) par rapport à ladite deuxième zone (140b) ;
- un premier manipulateur (150) déplaçable vers et depuis ledit dispositif de confection (140), dans ladite première zone (140a), pour charger ledit tambour de formation (110a, 110b) dans ladite première zone (140a) ;
- un second manipulateur (160) déplaçable vers et depuis ledit dispositif de confection (140), dans ladite troisième zone (140c), pour décharger ledit tambour de formation (110a, 110b) à partir de ladite troisième zone (140c).

12. Usine (1) selon la revendication 11, dans laquelle ledit premier manipulateur (150) est fonctionnellement couplé à un premier groupe moteur (152) configuré pour mettre ledit tambour de formation (110a, 110b) en rotation autour de son axe de rotation lorsque ledit tambour de formation (110a, 110b) est couplé audit premier manipulateur (150) et dans laquelle ledit second manipulateur (160) est fonctionnellement couplé à un second groupe moteur (162) configuré pour mettre ledit tambour de formation (110a, 110b) en rotation autour de son axe de rotation lorsque ledit tambour de formation (110a, 110b) est couplé audit second manipulateur (160).

13. Usine (1) selon la revendication 11 ou 12, dans laquelle ledit dispositif de confection (140) comprend :
- un premier organe de support (170) configuré pour supporter ledit tambour de formation (110a, 110b) en porte-à-faux ;
- un second organe de support (175) configuré pour supporter ledit tambour de formation (110a, 110b) en porte-à-faux.

14. Usine (1) selon l'une quelconque des revendications 11 à 13, dans laquelle ladite au moins une station d'usinage (125) comprend :
- un premier chargeur (180) déplaçable entre une position respective dans laquelle ledit premier chargeur (180) est agencé totalement à l'extérieur dudit dispositif de confection (140) et une position respective dans laquelle ledit premier chargeur (180) est agencé au moins partiellement dans ladite première zone (140a) pour charger un premier élément structural de pneu dans ladite première zone (140a) ;
- un second chargeur (185) fonctionnellement indépendant du premier chargeur (180) et déplaçable entre une position respective dans laquelle ledit second chargeur (185) est agencé totalement à l'extérieur dudit dispositif de confection (140) et une position respective dans laquelle ledit second chargeur (185) est agencé au moins partiellement dans ladite troisième zone (140c) pour charger un second élément structural de pneu dans ladite troisième zone (140c).

15. Usine (1) selon l'une quelconque des revendications 11 à 14, dans laquelle lesdites première zone (140a), deuxième zone (140b) et troisième zone (140c) sont alignées le long d'une première direction (d1) d'extension dudit dispositif de confection (140), ledit premier manipulateur (150) est déplaçable le long d'une deuxième direction (d2) perpendiculaire à ladite première direction (d1) entre une position respective dans laquelle ledit premier manipulateur (150) est agencé totalement à l'extérieur dudit dispositif de confection (140) et une position respective dans laquelle ledit premier manipulateur (150) est agencé partiellement à l'intérieur dudit dispositif de confection (140), et ledit second manipulateur (160) est déplaçable le long d'une troisième direction (d3) parallèle à ladite deuxième direction (d2) entre une position respective dans laquelle ledit second manipulateur (160) est agencé totalement à l'extérieur dudit dispositif de confection (140) et une position respective dans laquelle ledit second manipulateur (160) est agencé partiellement à l'intérieur dudit dispositif de confection (140).
